# FASCICULE DE BREVET EUROPEEN

(11) **EP 2 623 749 B1**
(45) Date de publication et mention de la délivrance du brevet: **07.02.2018**
(21) Numéro de dépôt: 12008252.4
(22) Date de dépôt: 11.12.2012
(51) Int. Cl.: F02C 9/00, F02C 9/56, G01D 1/00

(54) **Dispositif et procédé de régulation d'une installation motrice comportant au moins un turbomoteur, et aéronef**
Vorrichtung und Verfahren zur Regelung einer Antriebsanlage, die mindestens über einen Turbomotor verfügt, und Luftfahrzeug
Device and method for controlling a power plant comprising at least one turbine engine, and aircraft

(30) Priorité: 06.02.2012 FR 1200343
(43) Date de publication de la demande: 07.08.2013
(73) Titulaire: Airbus Helicopters, 13725 Marignane Cedex (FR)
(72) Inventeur: Martin, Laurent, F-13160 Chateaurenard (FR)
(74) Mandataire: GPI & Associés

(56) Documents cités:
- EP-A1- 2 006 202
- FR-A1- 2 902 407
- US-A- 4 736 331
- US-A- 5 873 546
- US-A1- 2004 119 293

## Description

La présente invention concerne un dispositif et un procédé de régulation d'une installation motrice comportant au moins un turbomoteur, et un aéronef tel qu'un giravion

En effet, un giravion comporte classiquement un rotor principal de sustentation voire d'avancement dans le cadre d'un hélicoptère. Ce rotor principal est mis en mouvement par un système dénommé « installation motrice » par commodité par la suite.

Une installation motrice comporte au moins un turbomoteur muni d'un générateur de gaz et une turbine libre pour entraîner en rotation le rotor principal. Un tel générateur de gaz est muni d'un compresseur lié à une turbine haute pression , cette turbine haute pression étant disposée en amont de la turbine libre.

La puissance motrice est alors prélevée sur un étage basse pression de chaque turbine libre, lequel étage est mécaniquement indépendant de l'ensemble du compresseur et de l'étage haute pression du turbomoteur. Chaque turbine libre d'un turbomoteur ayant une vitesse de rotation comprise entre 20 000 et 50 000 tours par minute, une boîte de réduction de vitesse est nécessaire pour la liaison au rotor principal dont la vitesse de rotation est sensiblement comprise entre 200 et 400 tours par minute: il s'agit de la boîte de transmission principale de puissance.

Pour contrôler le fonctionnement d'un turbomoteur, l'aéronef comporte un calculateur moteur, connu notamment sous l'acronyme FADEC soit « Full Authority Digital Engine Control » en langue anglaise.

Par ailleurs, l'aéronef comporte aussi un moyen de prélèvement d'air apte à prélever de l'air à partir du générateur de gaz d'un turbomoteur. Un tel moyen de prélèvement d'air peut comporter une valve pour régler le niveau de prélèvement.

En outre, l'aéronef comporte un moyen de prélèvement mécanique pour prélever mécaniquement de l'énergie sur le générateur de gaz.

Ce moyen de prélèvement mécanique peut comprendre un équipement électrique lié au générateur de gaz d'au moins un turbomoteur. Un tel équipement électrique remplit alors une fonction de générateur électrique en prélevant mécaniquement de l'énergie sur le générateur de gaz.

L'équipement électrique peut aussi remplir une fonction de démarreur en entraînant le générateur de gaz durant une phase de démarrage.

L'équipement électrique est alors parfois dénommé « générateur-démarreur ».

Selon un autre aspect, les limitations thermiques du turbomoteur et les limitations en couple de la boîte de transmission principale permettent de définir trois régimes normaux d'utilisation du turbomoteur:

Parmi les régimes connus, on peut citer:
- le régime de décollage associant une puissance maximale au décollage PMD à une durée d'utilisation de l'ordre de cinq à dix minutes,
- le régime maximal continu associant une puissance maximale en continu PMC à une durée d'utilisation illimitée,
- le régime transitoire associant une puissance maximale en transitoire PMT à une durée d'utilisation limitée.

Il existe aussi des régimes de surpuissance en urgence sur les aéronefs comprenant au moins deux moteurs, ces régimes étant utilisés lorsque l'un des moteurs tombe en panne:
- un premier régime d'urgence associant une puissance de super urgence OEI30" à une durée de l'ordre de trente secondes consécutives, ce premier régime d'urgence pouvant être utilisé environ trois fois pendant un vol;
- un deuxième régime d'urgence associant une puissance maximale d'urgence OEI2' à durée d'utilisation de l'ordre de deux minutes ;
- un troisième régime d'urgence associant une puissance intermédiaire d'urgence OEIcont à une durée d'utilisation couvrant la fin d'un vol après la panne du turbomoteur par exemple.

Chaque régime de fonctionnement d'un turbomoteur est alors surveillé en utilisation au travers de paramètres de surveillance.

Le turbomoteur étant pourvu d'un ensemble de turbines incluant une turbine haute pression et une turbine basse pression, un paramètre de surveillance peut être une température des gaz circulant dans cet ensemble.

Notamment, une turbine haute pression étant disposée en amont d'une turbine libre, un premier paramètre de surveillance peut être la température, dénommée TET par l'homme du métier, des gaz à l'entrée de la turbine haute pression.

En effet, les aubes de la turbine haute pression du turbomoteur sont soumises à la force centrifuge et à la température TET. Au-delà d'un certain niveau, le matériau constitutif des aubes est soumis à un fluage ce qui a pour conséquence une dilatation allongeant les aubes. Ainsi, ces aubes sont amenées à toucher le carter de la turbine haute pression et donc à se dégrader. La température TET est donc bien directement liée à la dégradation du turbomoteur.

Néanmoins, la température TET étant difficile à mesurer en raison de son caractère relativement inhomogène, le premier paramètre de surveillance peut être la température, dénommée T45 par l'homme du métier, des gaz à l'entrée de la turbine libre. Cette température T45 est un bon indicateur de la température TET, par suite elle est représentative de la dégradation du turbomoteur.

Un premier paramètre de surveillance est donc une température d'un ensemble d'au moins une turbine, cette température pouvant être la température TET des gaz à l'entrée de la turbine haute pression ou la température T45 des gaz à l'entrée de la turbine libre.

Par ailleurs, un deuxième paramètre de surveillance est relatif à la vitesse de rotation du générateur de gaz du turbomoteur, dénommée Ng par l'homme du métier.

Un troisième paramètre de surveillance peut être le couple Tq exercé par un arbre de sortie du turbomoteur mettant en mouvement une boîte de transmission de puissance.

Ce couple est notamment surveillé pour garantir l'intégrité physique de l'arbre de transmission ou de la boîte de transmission de puissance.

Dès lors, chaque régime de fonctionnement d'un turbomoteur est associé à une première limitation du premier paramètre de surveillance et à une deuxième limitation du deuxième paramètre de surveillance pour préserver la santé du turbomoteur. De plus; chaque régime de fonctionnement est associé à une troisième limitation du troisième paramètre de surveillance pour respecter le couple admissible par des systèmes mécaniques entraînés par la turbine libre du turbomoteur.

Lorsqu'un régime de fonctionnement d'un turbomoteur est enclenché, la puissance développée par le turbomoteur est donc limitée par au moins une desdites limitations. La capacité d'accélération d'un turbomoteur est en outre limitée par le débit de carburant pouvant être fourni au turbomoteur.

Par ailleurs, sur un aéronef comportant au moins deux turbomoteurs, lorsque le troisième régime d'urgence est activité suite à la panne d'un turbomoteur il demeure possible d'effectuer un prélèvement d'air et un prélèvement mécanique sur chaque turbomoteur en fonctionnement.

Par contre, lorsque le premier régime d'urgence ou le deuxième régime d'urgence sont activés, des délestages sont imposés. Le prélèvement d'air est classiquement coupé sur les turbomoteurs en fonctionnement.

Les documents FR 2 914 697 et US 2010/ 0058731 concernent un turbomoteur comportant un générateur de gaz et une turbine libre entraînée en rotation par le flux de gaz généré par le générateur de gaz. Le turbomoteur comporte en outre un moteur auxiliaire couplé à un arbre du générateur de gaz, pour fournir une quantité d'énergie cinétique de rotation supplémentaire à cet arbre.

En outre, ces documents prévoient de prélever une quantité d'énergie cinétique de rotation sur l'arbre du générateur de gaz lors d'une phase de décélération du turbomoteur afin de réaliser une assistance à la décélération.

L'arrière plan technologique inclut les documents EP 2006202, US 2004/119293, US 4736331, US 5873546, FR 2902407, FR 2968716.

Le document EP 2006202 décrit une installation motrice comportant au moins un turbomoteur. Un dispositif de contrôle et de régulation comporte un calculateur électronique de contrôle et de régulation, un système d'affichage et un moyen d'alarme.

Des régimes de fonctionnement spécifient des limites de paramètres de surveillance du turbomoteur. Les paramètres de surveillance sont la vitesse de rotation d'un générateur de gaz du turbomoteur, un couple moteur et une température d'éjection de gaz.

La présente invention a alors pour objet de proposer un procédé de régulation d'une installation motrice comportant au moins un turbomoteur pour optimiser la puissance développée par cette installation motrice, et non pas pour accélérer le turbomoteur.

Selon l'invention, on met en oeuvre un procédé de régulation d'une installation motrice comportant au moins un turbomoteur, ce turbomoteur étant muni d'un générateur de gaz et d'un ensemble de turbines. De plus, l'installation motrice comprend un moyen de prélèvement mécanique pour prélever de l'énergie sur le générateur de gaz du turbomoteur et un calculateur moteur contrôlant le turbomoteur pour respecter au moins une première limitation d'une température des gaz au sein de l'ensemble de turbines ainsi qu'une deuxième limitation d'un vitesse de rotation Ng du générateur de gaz.

La première limitation peut être une limitation d'une température TET des gaz à l'entrée d'une turbine haute pression ou la température T45 des gaz à l'entrée de la turbine libre.

Selon ce procédé, durant une étape d'évaluation on détermine si la vitesse de rotation Ng du générateur de gaz a atteint la deuxième limitation.

De plus, durant cette étape d'évaluation on détermine si la température des gaz évaluée a atteint la première limitation.

Dès lors, durant une étape d'optimisation, si la vitesse de rotation du générateur de gaz a atteint la deuxième limitation et si ladite température n'a pas atteint la première limitation, on commande le moyen de prélèvement mécanique pour augmenter le prélèvement mécanique effectué afin d'optimiser la puissance développée par le turbomoteur.

En effet, un paramètre de surveillance du turbomoteur peut avoir atteint sa limite au régime de fonctionnement considéré, alors que les autres paramètres de surveillance présentent encore une marge par rapport à leur limite au régime de fonctionnement considéré.

Dès lors, si la vitesse de rotation Ng du générateur de gaz a atteint la première limitation correspondant au régime de fonctionnement courant du turbomoteur, on détermine si le turbomoteur présente toutefois une marge en température.

Dans l'affirmative, on prélève mécaniquement de l'énergie sur le générateur de gaz en mettant en oeuvre le moyen de prélèvement mécanique.

Il en résulte la création d'un couple résistant sur le générateur de gaz. La vitesse de rotation Ng du générateur de gaz décroit donc.

Pour contrer le couple résistant, le calculateur moteur augmente naturellement le débit de carburant alimentant le turbomoteur en appliquant une loi de régulation usuelle.

La vitesse de rotation de la turbine libre demeure constante et la puissance développée par le turbomoteur à partir de cette turbine libre augmente.

Par suite, ce procédé permet donc d'augmenter la puissance développée par un turbomoteur lorsque la vitesse de rotation Ng du générateur a atteint sa limite.

Contrairement à l'enseignement du document FR 2 914 697, ce procédé ne vise pas à accélérer la turbine libre dans une phase d'accélération, mais à augmenter le couple en sortie de turbine libre sans augmenter sa vitesse de rotation et en freinant le générateur de gaz. A cet effet, on sollicite le moyen de prélèvement mécanique en prise sur le générateur de gaz.

Eventuellement, on verra que l'on peut alimenter des équipements électriques, et non pas une batterie, installés à bord de l'aéronef pour augmenter le débit carburant du turbomoteur sans faire chuter la vitesse de rotation de la turbine libre.

Autrement dit, si le générateur de gaz atteint sa limite, on met en oeuvre le moyen de prélèvement mécanique pour réduire la vitesse de rotation de ce générateur de gaz et ainsi augmenter le couple en sortie.

Ce procédé peut de plus comporter une ou plusieurs des caractéristiques additionnelles qui suivent.

Par exemple, selon une réalisation :
- durant l'étape d'évaluation on détermine si le moyen de prélèvement mécanique a atteint un prélèvement mécanique maximal, et,
- durant l'étape d'optimisation, si la vitesse de rotation du générateur de gaz a atteint ladite deuxième limitation, si la température surveillée n'a pas atteint la première limitation correspondante et si le moyen de prélèvement mécanique n'a pas atteint un prélèvement mécanique maximal, on commande le moyen de prélèvement mécanique pour augmenter le prélèvement mécanique effectué afin d'optimiser la puissance développée par ledit turbomoteur.

Selon cette réalisation, on vérifie que le moyen de prélèvement mécanique peut créer un couple résistant avant de le solliciter pour augmenter la puissance développée par le turbomoteur.

Un tel moyen de prélèvement mécanique peut ainsi être un générateur électrique, voire un générateur électrique remplissant aussi une fonction de démarreur.

Par ailleurs, le moyen de prélèvement mécanique peut alimenter électriquement au moins un dispositif électrique, on maximise une consommation électrique dudit au moins un dispositif électrique pour augmenter le prélèvement mécanique effectué sur le turbomoteur. On peut maximiser la consommation électrique en additionnant les dispositifs consommateurs d'électricité.

Par exemple, l'aéronef peut comporter des dispositifs électriques qui ne sont temporairement pas en fonctionnement, tels que des phares ou un dispositif de climatisation par exemple.

On peut alors activer ces dispositifs électriques pour maximiser le prélèvement mécanique.

En outre, on peut agencer un dissipateur électrique alimenté électriquement par le moyen de prélèvement mécanique, le dissipateur électrique sollicitant de l'énergie électrique si la vitesse de rotation Ng du générateur de gaz a atteint la deuxième limitation correspondante et si la température surveillée n'a pas atteint la première limitation correspondante.

Le dissipateur électrique peut être un organe dédié uniquement à cette fonction.

Outre un procédé, l'invention vise aussi un dispositif de régulation pour réguler une installation motrice comportant au moins un turbomoteur, le turbomoteur comportant un générateur de gaz et un ensemble de turbines. Ce dispositif de régulation comporte un moyen de prélèvement mécanique pour prélever de l'énergie sur le générateur de gaz du turbomoteur. Le dispositif de régulation comporte un calculateur moteur contrôlant le turbomoteur pour respecter au moins une première limitation d'une température surveillée des gaz au sein dudit ensemble ainsi qu'une deuxième limitation d'une vitesse de rotation Ng du générateur de gaz.

Dès lors, le calculateur moteur comporte une unité de calcul et une mémoire stockant des instructions, l'unité de calcul exécutant lesdites instructions pour déterminer si la vitesse de rotation Ng du générateur de gaz a atteint la deuxième limitation et si la température surveillée a atteint la première limitation.

De plus, le dispositif de régulation comporte un calculateur avionique communiquant avec le calculateur moteur et le moyen de prélèvement mécanique. Le calculateur avionique comprend un système de calcul exécutant des instructions mémorisées pour commander le moyen de prélèvement afin d'augmenter le prélèvement mécanique effectué sur le turbomoteur si la vitesse de rotation Ng du générateur de gaz a atteint la deuxième limitation et si la température surveillée n'a pas atteint la première limitation.

Ce dispositif peut comprendre une ou plusieurs des caractéristiques additionnelles qui suivent.

Par exemple, le moyen de prélèvement mécanique est un équipement électrique alimentant électriquement au moins un dispositif électrique par le biais d'un coeur électrique.

Un tel moyen de prélèvement mécanique peut être un générateur électrique, remplissant éventuellement une fonction de démarreur.

En outre, le calculateur avionique peut communiquer avec le moyen de prélèvement mécanique par le biais du coeur électrique pour déterminer si le moyen de prélèvement mécanique a atteint un prélèvement mécanique maximal. Dans la négative, le moyen de prélèvement mécanique peut être utilisé pour accroître la puissance développée par le turbomoteur.

Par ailleurs, le dispositif de régulation peut comporter un dissipateur électrique alimenté électriquement par le moyen de prélèvement mécanique, le dissipateur électrique sollicitant de l'énergie électrique si la vitesse de rotation Ng du générateur de gaz a atteint ladite deuxième limitation et si la température surveillée n'a pas atteint la première limitation.

Selon un autre aspect, l'invention vise un aéronef muni d'une installation motrice comportant au moins un turbomoteur, le turbomoteur comportant un générateur de gaz et un ensemble de turbines.

Cet aéronef est alors muni d'un dispositif de régulation du type décrit précédemment.

L'invention et ses avantages apparaîtront avec plus de détails dans le cadre de la description qui suit avec des exemples de réalisation donnés à titre illustratif en référence aux figures annexées qui représentent :
- la figure 1, une vue d'un aéronef selon l'invention, et
- la figure 2, un schéma explicitant le procédé selon l'invention.

Les éléments présents dans plusieurs figures distinctes sont affectés d'une seule et même référence.

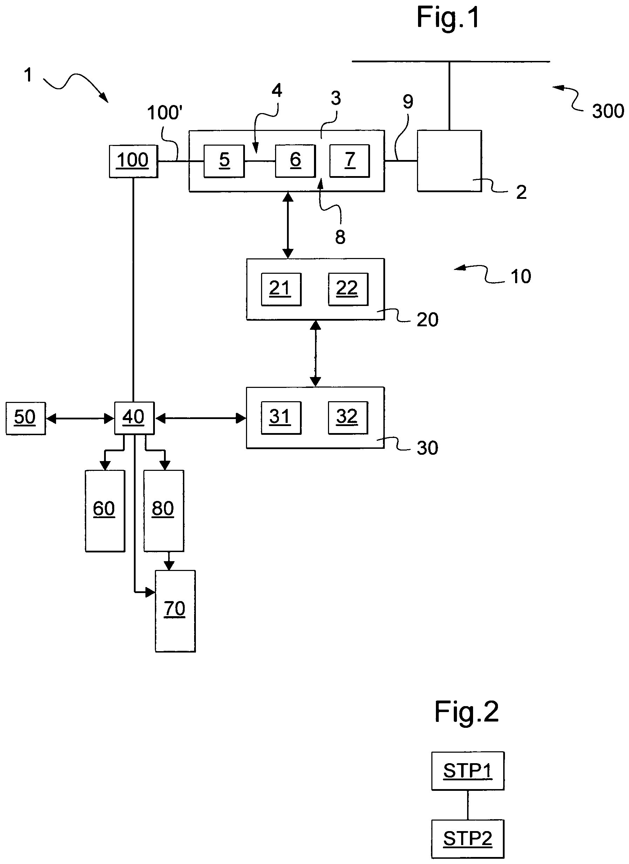

La figure 1 présente un aéronef 1 muni d'une voilure tournante 300.

L'aéronef 1 comporte au moins un turbomoteur 3 pour entraîner la voilure tournante 300 au travers d'une boîte de transmission de puissance principale 2.

Chaque turbomoteur comporte un générateur de gaz 4 et une turbine libre 7. Par exemple, le générateur de gaz comporte un compresseur 5 coopérant avec une turbine haute pression 6, la turbine haute pression 6 étant agencée en amont de la turbine libre 7. La turbine haute pression 6 et la turbine libre 7 forment conjointement un ensemble 8 de turbines 6, 7.

La turbine libre 7 est alors liée à la boîte de transmission de puissance principale 2 par une chaîne cinématique 9. Cette chaîne cinématique 9 est munie par exemple d'un arbre de sortie mis en rotation par la turbine libre.

Par ailleurs, l'aéronef 1 comporte un dispositif de régulation 10 pour maximiser la puissance pouvant être développée par ce turbomoteur.

Un tel dispositif de régulation est d'autant plus intéressant dans le cadre d'un aéronef multi-moteurs pour optimiser la puissance des turbomoteurs en fonctionnement suite à la panne d'un des turbomoteurs.

Ce dispositif de régulation 10 est muni d'un calculateur moteur 20, tel qu'un calculateur moteur de type FADEC.

Ce calculateur moteur 20 comporte alors une unité de calcul 21 et une mémoire stockant des instructions exécutables par l'unité de calcul 21.

De manière usuelle, le calculateur moteur contrôle la position d'un doseur carburant pour commander le fonctionnement du turbomoteur 3.

En fonction du régime de fonctionnement du turbomoteur choisi par le pilote, le calculateur moteur limite le débit en carburant afin qu'aucun paramètre de surveillance du turbomoteur ne dépasse la limite associée audit régime de fonctionnement.

Notamment, le calculateur moteur 20 contrôle le turbomoteur afin qu'une température surveillée ne dépasse pas une première limitation.

Selon la variante, le calculateur moteur compare la température TET des gaz à l'entrée d'une turbine haute pression ou la température T45 des gaz à l'entrée de la turbine libre à une première limitation LimTET, LimT45.

De plus, le calculateur moteur 20 contrôle le turbomoteur afin que la vitesse de rotation Ng du générateur de gaz 4 ne dépasse pas une deuxième limitation LimNg.

En référence à la figure 2 et suivant le procédé mis en oeuvre, durant une étape d'évaluation STP1 on détermine si deux critères sont remplis.

Ainsi, le calculateur moteur 20 mesure la vitesse de rotation Ng du générateur de gaz 4 et détermine si cette vitesse de rotation Ng a atteint la deuxième limitation LimNg correspondante au régime de fonctionnement appliqué.

Dans l'affirmative, un premier critère est rempli.

De plus, le calculateur moteur 20 mesure une température des gaz au sein de l'ensemble 8 de turbines 6, 7, à savoir la température TET des gaz à l'entrée de la turbine haute pression 6 ou la température T45 des gaz à l'entrée de la turbine libre 7. Ce calculateur moteur 20 détermine si la température surveillée est inférieure la première limitation LimTET, LimT45 correspondante.

Dans l'affirmative, un deuxième critère est rempli.

En référence à la figure 2, durant une étape d'optimisation STP2 on prélève mécaniquement de l'énergie sur le générateur de gaz 4 si le premier critère et le deuxième critère sont remplis.

Il en résulte de fait un ralentissement de la vitesse de rotation Ng du générateur de gaz. Le calculateur moteur 20 augmente alors le débit de carburant fourni au turbomoteur pour compenser ce ralentissement. Par suite, la puissance développée par le turbomoteur est donc optimisée.

En référence à la figure 1, le dispositif de régulation 10 comporte à cet effet un moyen de prélèvement mécanique 100 d'énergie.

Ce moyen de prélèvement mécanique 100 peut être un équipement électrique de type générateur électrique. Le moyen de prélèvement mécanique 100 est alors entraîné en rotation par le générateur de gaz 4 via un arbre 100'.

Le moyen de prélèvement mécanique 100 peut aussi fonctionner dans un mode moteur pour remplir une fonction de démarreur.

De plus, le dispositif de régulation est muni d'un calculateur avionique 30 muni d'un système de calcul 31 et d'un moyen de stockage 32 mémorisant des instructions.

Le calculateur avionique 30 communique alors avec le calculateur moteur 20 pour déterminer si les deux critères précités sont remplies.

Dans l'affirmative, le calculateur avionique 30 communique avec le moyen de prélèvement mécanique 100 afin de requérir une augmentation du prélèvement mécanique.

II est à noter que préalablement à cette requête de prélèvement, le calculateur avionique peut déterminer si le prélèvement mécanique effectué peut être augmenté.

Par exemple, le calculateur avionique 30 est relié à un coeur électrique 40. Ce coeur électrique peut être relié au moyen de prélèvement mécanique 100, mais aussi à une pluralité de dispositifs électriques 50, 60, 70.

De tels dispositifs électriques peuvent comprendre un dissipateur d'énergie 50 utilisé uniquement pour permettre l'accroissement du prélèvement mécanique.

En outre, ces dispositifs électriques peuvent comporter des premiers équipements 60 alimentés directement par le coeur électrique 40, et des deuxièmes équipements 70 alimentés électriquement directement par le coeur électrique 40 ou par le biais d'une batterie 80.

Le calculateur avionique 30 communique alors avec ledit coeur électrique 40 pour déterminer s'il est possible de maximiser la consommation électrique desdits dispositifs électriques 50, 60, 70.

Le coeur électrique peut notamment vérifier si certains équipements électriques 50, 60, 70 sont en service. Dans la négative, il est en effet possible de les activer pour accroître la consommation électrique de l'aéronef.

Par exemple, le calculateur avionique 30 demande au coeur électrique un état de fonctionnement des dispositifs électriques. Un tel état de fonctionnement peut indiquer que des phares ne sont en fonctionnement.

Si les deux critères précités sont remplis, le calculateur avionique 30 ordonne alors au coeur électrique 40 d'allumer ces phares. Pour alimenter les phares, le coeur électrique requiert alors une augmentation du prélèvement mécanique effectué par le moyen de prélèvement mécanique sur le générateur de gaz 4.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Procédé de régulation d'une installation motrice comportant au moins un turbomoteur (3), ledit turbomoteur (3) comportant un générateur de gaz (4) et un ensemble (8) de turbines (6, 7), ladite installation motrice comportant un moyen de prélèvement mécanique (100) pour prélever de l'énergie sur ledit générateur de gaz (4) dudit turbomoteur (3) et un calculateur moteur (20), ledit calculateur moteur (20) contrôlant ledit turbomoteur (3) pour respecter au moins une première limitation (LimTET, LimT45) d'une température (TET, T45) des gaz au sein dudit ensemble (8) ainsi qu'une deuxième limitation (LimNg) d'une vitesse de rotation (Ng) du générateur de gaz (4),
**caractérisé en ce que** :
- durant une étape d'évaluation (STP1), on détermine si la vitesse de rotation (Ng) du générateur de gaz (4) a atteint ladite deuxième limitation (LimNg),
- durant une étape d'évaluation (STP1) on détermine si ladite température (TET, T45) a atteint ladite première limitation (LimTET, LimT45),
- durant une étape d'optimisation (STP2), si la vitesse de rotation (Ng) du générateur de gaz (4) a atteint ladite deuxième limitation (LimNg) et si ladite température (TET, T45) n'a pas atteint ladite première limitation (LimTET, LimT45), on commande le moyen de prélèvement mécanique (100) pour augmenter le prélèvement mécanique effectué afin d'optimiser la puissance développée par ledit turbomoteur (3).

2. Procédé selon la revendication 1,
**caractérisé en ce que** :
- durant l'étape d'évaluation (STP1) on détermine si le moyen de prélèvement mécanique (100) a atteint un prélèvement mécanique maximal, et
- durant l'étape d'optimisation (STP2), si la vitesse de rotation (Ng) du générateur de gaz (4) a atteint ladite deuxième limitation (LimNg), si ladite température (TET, T45) n'a pas atteint ladite première limitation (LimTET, LimT45) et si le moyen de prélèvement mécanique (100) n'a pas atteint un prélèvement mécanique maximal, on commande le moyen de prélèvement mécanique pour augmenter le prélèvement mécanique effectué afin d'optimiser la puissance développée par ledit turbomoteur (3).

3. Procédé selon l'une quelconque des revendications 1 à 2,
**caractérisé en ce que**, ledit moyen de prélèvement mécanique (100) alimentant électriquement au moins un dispositif électrique (50, 60, 70), on maximise une consommation électrique dudit au moins un dispositif électrique (50, 60, 70) pour augmenter le prélèvement mécanique effectué sur ledit turbomoteur (3).

4. Procédé selon l'une quelconque des revendications 1 à 3,
**caractérisé en ce qu'**on agence un dissipateur électrique (50) alimenté électriquement par ledit moyen de prélèvement mécanique (100), ledit dissipateur électrique (50) sollicitant de l'énergie électrique si la vitesse de rotation (Ng) du générateur de gaz (4) a atteint ladite deuxième limitation (LimNg) et si ladite température (TET, T45) n'a pas atteint ladite première limitation (LimTET, LimT45).

5. Dispositif de régulation (10) pour réguler une installation motrice comportant au moins un turbomoteur (3), ledit turbomoteur (3) comportant un générateur de gaz (4) et un ensemble (8) de turbines (6, 7), ledit dispositif de régulation (10) comportant un moyen de prélèvement mécanique (10) pour prélever de l'énergie sur ledit générateur de gaz (4) dudit turbomoteur (3), ledit dispositif de régulation (10) comportant un calculateur moteur (20) contrôlant ledit turbomoteur (3) pour respecter au moins une première limitation (LimTET, LimT45) d'une température (TET, T45) des gaz au sein dudit ensemble (8) ainsi qu'une deuxième limitation (LimNg) d'une vitesse de rotation (Ng) du générateur de gaz (4),
**caractérisé en ce que** :
- ledit calculateur moteur (20) comporte une unité de calcul (21) et une mémoire (22) stockant des instructions, ladite unité de calcul (21) exécutant lesdites instructions pour déterminer si la vitesse de rotation (Ng) du générateur de gaz a atteint ladite deuxième limitation (LimNg) et si ladite température (TET, T45) a atteint ladite première limitation (LimTET, LimT45),
- ledit dispositif de régulation (10) comporte un calculateur avionique (30) communiquant avec ledit calculateur moteur (20) et ledit moyen de prélèvement mécanique (100), ledit calculateur avionique (30) comprenant un système de calcul (31) exécutant des instructions mémorisées pour commander le moyen de prélèvement mécanique (100) afin d'augmenter le prélèvement mécanique effectué sur ledit turbomoteur (3) si la vitesse de rotation (Ng) du générateur de gaz (4) a atteint ladite deuxième limitation (LimNg) et si ladite température (TET, T45) n'a pas atteint ladite première limitation (LimTET, LimT45).

6. Dispositif de régulation selon la revendication 5,
**caractérisé en ce que**, ledit moyen de prélèvement mécanique (100) est un équipement électrique alimentant électriquement au moins un dispositif électrique (50, 60, 70) par le biais d'un coeur électrique (40).

7. Dispositif de régulation selon la revendication 6,
**caractérisé en ce que**, ledit calculateur avionique (30) communique avec le moyen de prélèvement mécanique (100) par le biais dudit coeur électrique (40) pour déterminer si le moyen de prélèvement mécanique (100) a atteint un prélèvement mécanique maximal.

8. Dispositif de régulation selon l'une quelconque des revendications 5 à 7,
**caractérisé en ce que** le dispositif de régulation (10) comporte un dissipateur électrique (50) alimenté électriquement par le moyen de prélèvement mécanique (100), ledit dissipateur électrique (50) sollicitant de l'énergie électrique si la vitesse de rotation (Ng) du générateur de gaz (4) a atteint ladite deuxième limitation (LimNg) et si ladite température (TET, T45) n'a pas atteint ladite première limitation (LimTET, LimT45).

9. Aéronef (1) muni d'une installation motrice comportant au moins un turbomoteur (3), ledit turbomoteur (3) comportant un générateur de gaz (4) et un ensemble (8) de turbines (6, 7),
**caractérisé en ce que** cet aéronef comporte un dispositif de régulation (10) selon l'une quelconque des revendications 5 à 8.

## Patentansprüche

1. Verfahren zur Regelung eines Antriebsaggregats mit mindestens einem Turbomotor (3), wobei der Turbomotor (3) einen Gasgenerator (4) und eine Gruppe (8) von Turbinen (6, 7) aufweist, wobei das Antriebsaggregat ein Mittel (100) zur mechanischen Entnahme aufweist zum Entnehmen von Energie von dem Gasgenerator (4) des Turbomotors (3) und ein Motorsteuergerät (20), wobei das Motorsteuergerät (20) den Turbomotor (3) steuert, um mindestens einen ersten Grenzwert (LimTET, LimT45) einer Temperatur (TET, T45) des Gases in der Gruppe (8) sowie einen zweiten Grenzwert (LimNg) einer Drehzahl (Ng) des Gasgenerators (4) einzuhalten, **dadurch gekennzeichnet, dass**
- während eines Berechnungsschritts (STP1) bestimmt wird, ob die Drehzahl (Ng) des Gasgenerators (4) den zweiten Grenzwert (LimNg) erreicht hat,
- während eines Berechnungsschritts (STP1) bestimmt wird, ob die Temperatur (TET, T45) den ersten Grenzwert (LimTET, LimT45) erreicht hat,
- während eines Optimierungsschritts (STP2), wenn die Drehzahl (Ng) des Gasgenerators (4) den zweiten Grenzwert (LimNg) erreicht hat und wenn die Temperatur (TET, T45) den ersten Grenzwert (LimTET, LimT45) nicht erreicht hat, das Mittel (100) zur mechanischen Entnahme gesteuert wird, um die ausgeführte mechanische Entnahme zu erhöhen, um die von dem Turbomotor (3) entwickelte Leistung zu optimieren.

2. Verfahren nach Anspruch 1,
**dadurch gekennzeichnet, dass**:
- während des Berechnungsschritts (STP1) bestimmt wird, ob das Mittel (100) zur mechanischen Entnahme eine maximale mechanische Entnahme erreicht hat, und
- während des Optimierungsschritts (STP2), wenn die Drehzahl (Ng) des Gasgenerators (4) den zweiten Grenzwert (LimNg) erreicht hat, wenn die Temperatur (TET, T45) den ersten Grenzwert (LimTET, LimT45) nicht erreicht hat, und wenn das Mittel (100) zur mechanischen Entnahme eine maximale mechanische Entnahme nicht erreicht hat, das Mittel zur mechanischen Entnahme gesteuert wird, um die ausgeführte mechanische Entnahme zu erhöhen, um die von dem Turbomotor (3) entwickelte Leistung zu optimieren.

3. Verfahren nach einem der Ansprüche 1 bis 2,
**dadurch gekennzeichnet, dass**, während das Mittel (100) zur mechanischen Entnahme mindestens eine elektrische Vorrichtung (50, 60, 70) mit Strom versorgt, ein Stromverbrauch der mindestens einen elektrischen Vorrichtung (50, 60, 70) maximiert wird, um die an dem Turbomotor (3) ausgeführte mechanische Entnahme zu erhöhen.

4. Verfahren nach einem der Ansprüche 1 bis 3,
**dadurch gekennzeichnet, dass** ein Stromverbraucher (50) vorgesehen ist, der von dem Mittel (100) zur mechanischen Entnahme mit Strom gespeist wird, wobei der elektrische Verbraucher (50) elektrische Energie beansprucht, wenn die Drehzahl (Ng) des Gasgenerators (4) den zweiten Grenzwert (LimNg) erreicht hat und wenn die Temperatur (TET, T45) den ersten Grenzwert (LimTET, LimT45) nicht erreicht hat.

5. Regelungsvorrichtung (10) zur Regelung eines Antriebsaggregats mit mindestens einem Turbomotor (3), wobei der Turbomotor (3) einen Gasgenerator (4) und eine Gruppe (8) von Turbinen (6, 7) auf weist, wobei die Regelungsvorrichtung (10) ein mechanisches Entnahmemittel (10) aufweist zum Entnehmen von Energie von dem Gasgenerator (4) des Turbomotors (3), wobei die Regelungsvorrichtung (10) ein Motorsteuergerät (20) aufweist, das den Turbomotor (3) steuert, um mindestens einen ersten Grenzwert (LimTET, LimT45) einer Temperatur (TET, T45) des Gases in der Gruppe (8) sowie einen zweiten Grenzwert (LimNg) einer Drehzahl (Ng) des Gasgenerators (4) einzuhalten,
**dadurch gekennzeichnet, dass**
- das Motorsteuergerät (20) eine Recheneinheit (21) und einen Speicher (22), der Befehle speichert, aufweist, wobei die Recheneinheit (21) die Befehle ausführt, um zu bestimmen, ob die Drehzahl (Ng) des Gasgenerators den zweiten Grenzwert (LimNg) erreicht hat, und ob die Temperatur (TET, T45) den ersten Grenzwert (LimTET, LimT45) erreicht hat,
- die Regelungsvorrichtung (10) einen Flugmanagementrechner (30) aufweist, der mit dem Motorsteuergerät (20) und dem Mittel (100) zur mechanischen Entnahme kommuniziert, wobei der Flugmanagementrechner (30) ein Rechensystem (31) aufweist, das gespeicherte Befehle ausführt, um das Mittel (100) zur mechanischen Entnahme zu steuern, um die mechanische Entnahme, die an dem Turbomotor (3) ausgeführt wird, zu erhöhen, wenn die Drehzahl (Ng) des Gasgenerators (4) den zweiten Grenzwert (LimNg) erreicht hat, und wenn die Temperatur (TET, T45) den ersten Grenzwert (LimTET, LimT45) nicht erreicht hat.

6. Regelungsvorrichtung nach Anspruch 5,
**dadurch gekennzeichnet, dass** das Mittel (100) zur mechanischen Entnahme eine elektrische Ausrüstung ist, die mindestens eine elektrische Vorrichtung (50, 60, 70) über einen elektrischen Knoten (40) mit Strom speist.

7. Regelungsvorrichtung nach Anspruch 6,
**dadurch gekennzeichnet, dass** der Flugmanagementrechner (30) mit dem Mittel (100) zur mechanischen Entnahme über den elektrischen Knoten (40) kommuniziert, um zu bestimmen, ob das Mittel (100) zur mechanischen Entnahme eine maximale mechanische Entnahme erreicht hat.

8. Regelungsvorrichtung nach einem der Ansprüche 5 bis 7,
**dadurch gekennzeichnet, dass** die Regelungsvorrichtung (10) einen elektrischen Verbraucher (50) aufweist, der durch das Mittel (100) zur mechanischen Entnahme mit Strom gespeist wird, wobei der elektrische Verbraucher (50) elektrische Energie anfordert, wenn die Drehzahl (Ng) des Gasgenerators (4) den zweiten Grenzwert (LimNg) erreicht hat und wenn die Temperatur (TET, T45) den ersten Grenzwert (LimTET, LimT45) nicht erreicht hat.

9. Luftfahrzeug (1) mit einem Antriebsaggregat, welches mindestens einen Turbomotor (3) aufweist, wobei der Turbomotor (3) einen Gasgenerator (4) und eine Gruppe (8) von Turbinen (6, 7) aufweist, **dadurch gekennzeichnet, dass** das Luftfahrzeug eine Regelungsvorrichtung (10) nach einem der Ansprüche 5 bis 8 aufweist.

## Claims

1. Method of regulating a power plant comprising at least one turboengine (3), said turboengine (3) comprising a gas generator (4) and an assembly (8) of turbines (6, 7), said power plant comprising a mechanical withdrawal means (100) for withdrawing energy from said gas generator (4) of said turboengine (3) and an engine computer (20), said engine computer (20) controlling said turboengine (3) so as to comply with at least a first limitation (LimTET, LimT45) of a temperature (TET, T45) of the gases within said assembly (8) and with a second limitation (LimNg) of a speed of rotation (Ng) of the gas generator (4),
**characterised in that**:
- during an evaluation step (STP1), it is determined whether the speed of rotation (Ng) of the gas generator (4) has reached said second limitation (LimNg),
- during an evaluation step (STP1) it is determined whether said temperature (TET, T45) has reached said first limitation (LimTET, LimT45),
- during an optimisation step (STP2), if the speed of rotation (Ng) of the gas generator (4) has reached said second limitation (LimNg) and if said temperature (TET, T45) has not reached said first limitation (LimTET, LimT45), the mechanical withdrawal means (100) is commanded to increase the mechanical withdrawal effected so as to optimise the power developed by said turboengine (3).

2. Method according to claim 1,
**characterised in that**:
- during the evaluation step (STP1) it is determined whether the mechanical withdrawal means (100) has reached a maximum mechanical withdrawal, and
- during the optimisation step (STP2), if the speed of rotation (Ng) of the gas generator (4) has reached said second limitation (LimNg), if said temperature (TET, T45) has not reached said first limitation (LimTET, LimT45) and if the mechanical withdrawal means (100) has not reached a maximum mechanical withdrawal, the mechanical withdrawal means is commanded to increase the mechanical withdrawal effected so as to optimise the power developed by said turboengine (3).

3. Method according to any one of claims 1 to 2,
**characterised in that**, said mechanical withdrawal means (100) electrically supplying at least one electrical device (50, 60, 70), an electrical consumption of said at least one electrical device (50, 60, 70) is maximised to increase the mechanical withdrawal effected from said turboengine (3).

4. Method according to any one of claims 1 to 3,
**characterised in that** an electrical dissipator (50) is arranged electrically supplied by said mechanical withdrawal means (100), said electrical dissipator (50) requesting electrical energy if the speed of rotation (Ng) of the gas generator (4) has reached said second limitation (LimNg) and if said temperature (TET, T45) has not reached said first limitation (LimTET, LimT45).

5. Regulation device (10) for regulating a power plant comprising at least one turboengine (3), said turboengine (3) comprising a gas generator (4) and an assembly (8) of turbines (6, 7), said regulation device (10) comprising a mechanical withdrawal means (10) for withdrawing energy from said gas generator (4) of said turboengine (3), said regulation device (10) comprising an engine computer (20) controlling said turboengine (3) so as to comply with at least a first limitation (LimTET, LimT45) of a temperature (TET, T45) of the gases within said assembly (8) and with a second limitation (LimNg) of a speed of rotation (Ng) of the gas generator (4),
**characterised in that**:
- said engine computer (20) comprises a computation unit (21) and a memory (22) storing instructions, said computation unit (21) executing said instructions to determine whether the speed of rotation (Ng) of the gas generator has reached said second limitation (LimNg) and whether said temperature (TET, T45) has reached said first limitation (LimTET, LimT45),
- said regulation device (10) comprises an avionics computer (30) communicating with said engine computer (20) and with said mechanical withdrawal means (100), said avionics computer (30) comprising a computation system (31) executing stored instructions to command the mechanical withdrawal means (100) so as to increase the mechanical withdrawal effected from said turboengine (3) if the speed of rotation (Ng) of the gas generator (4) has reached said second limitation (LimNg) and if said temperature (TET, T45) has not reached said first limitation (LimTET, LimT45).

6. Regulation device according to claim 5,
**characterised in that**, said mechanical withdrawal means (100) is electrical equipment electrically supplying at least one electrical device (50, 60, 70) by means of an electrical master box (40).

7. Regulation device according to claim 6,
**characterised in that**, said avionics computer (30) communicates with the mechanical withdrawal means (100) by means of said electrical master box (40) to determine whether the mechanical withdrawal means (100) has reached a maximum mechanical withdrawal.

8. Regulation device according to any one of claims 5 to 7,
**characterised in that** the regulation device (10) comprises an electrical dissipator (50) electrically supplied by the mechanical withdrawal means (100), said electrical dissipator (50) requesting electrical energy if the speed of rotation (Ng) of the gas generator (4) has reached said second limitation (LimNg) and if said temperature (TET, T45) has not reached said first limitation (LimTET, LimT45).

9. Aircraft (1) provided with a power plant comprising at least one turboengine (3), said turboengine (3) comprising a gas generator (4) and an assembly (8) of turbines (6, 7),
**characterised in that** the aircraft comprises a regulation device (10) according to any one of claims 5 to 8.
